# EUROPÄISCHE PATENTANMELDUNG

(11) **EP 4 331 356 A1**
(43) Veröffentlichungstag der Anmeldung: **06.03.2024**
(21) Anmeldenummer: 23187765.5
(22) Anmeldetag: 26.07.2023
(51) Int. Cl.: A01M 7/00

(54) **LANDWIRTSCHAFTLICHE VERTEILMASCHINE MIT EINEM VERTEILGESTÄNGE UND VERFAHREN ZUR LAGESTEUERUNG EINES SOLCHEN VERTEILGESTÄNGES**

(30) Priorität: 01.09.2022 DE 102022122182
(71) Anmelder: HORSCH LEEB Application Systems GmbH, 94405 Landau an der Isar (DE)
(72) Erfinder: Leeb, Theodor, 94405 Landau an der Isar (DE)
(74) Vertreter: v. Bezold & Partner Patentanwälte - PartG mbB

(57) **Zusammenfassung**

Die Erfindung betrifft eine landwirtschaftliche Verteilmaschine, vorzugsweise eine Feldspritze oder einen pneumatischen Düngerstreuer, umfassend ein Verteilgestänge zum Ausbringen von Material, wie Düngemittel, Pflanzenschutzmittel oder Saatgut. Die Erfindung betrifft ferner ein Verfahren zur Lagesteuerung eines solchen Verteilgestänges. Die Verteilmaschine und das Verfahren zeichnen sich dadurch aus, dass bei einem Überfahren einer zu bearbeitenden landwirtschaftlichen Fläche (4) entlang einer Fahrspur (5) die Relativpositionen (a1 - a4) der Segmente mit den zugeordneten Positionsdaten (P) anhand der Daten der Sensoreinrichtung (10) und der Positionsbestimmungseinrichtung (6) bestimmt und in einer Speichereinrichtung (30) gespeichert werden. Bei einem späteren erneuten Überfahren der landwirtschaftlichen Fläche (4) entlang der gleichen oder im Wesentlichen gleichen Fahrspur (5) werden zur Lagesteuerung des Verteilgestänges (2) Stellsignale (11a) für eine Stelleinrichtung (11) zur Veränderung der Segmentpositionen abhängig von den gespeicherten Relativpositionen (a1 - a4) der Segmente und Positionsdaten (P) erzeugt, um die gleichen Relativpositionen (a1 - a4) der Segmente entlang der Fahrspur einzustellen, wie bei der vorherigen Überfahrt.

## Beschreibung

Die Erfindung betrifft eine landwirtschaftliche Verteilmaschine, vorzugsweise eine Feldspritze oder einen pneumatischen Düngerstreuer, umfassend ein Verteilgestänge zum Ausbringen von Material, wie Düngemittel, Pflanzenschutzmittel oder Saatgut. Die Erfindung betrifft ferner ein Verfahren zur Lagesteuerung eines solchen Verteilgestänges.

Aus dem Stand der Technik ist es bekannt, derartige landwirtschaftliche Verteilmaschinen (nachfolgend auch kurz als Verteilmaschinen bezeichnet) für die gleichmäßige Verteilung flüssiger und/ oder fester landwirtschaftlicher Wirkstoffe auf eine zu behandelnde landwirtschaftliche Fläche zu verwenden. Derartige Verteilmaschinen weisen zur Erreichung einer möglichst großen Schlagkraft ein sich in großer Breite quer zu einer Fahrtrichtung der Verteilmaschine ersteckendes Verteilgestänge auf. Zur Verteilung der jeweiligen Wirkstoffe sind am Verteilgestänge Verteilelemente wie z. B. Spritzdüsen, Prallelemente oder dergl. angebracht.

Beim Ausbringen soll der Abstand zwischen dem Verteilgestänge und dem Feldboden oder dem Pflanzenbestand über die gesamte Arbeitsbreite möglichst konstant bleiben. Bekannte Verteilgestänge weisen hierzu zueinander verschwenkbare Segmente auf. Die Segmente sind mittels einer Stelleinrichtung in einer senkrecht zur Vorwärtsfahrtrichtung der Verteilmaschine angeordneten Ebene relativ zueinander verschwenkbar. Ändert sich nun das Höhenprofil des überfahrenden Geländes und/oder des zu behandelnden Pflanzenbestands, so dass sich unterschiedliche Höhenabstände der Segmente ergeben, können die Segmente im Rahmen einer Lagesteuerung des Verteilgestänges relativ zueinander verschwenkt werden, so dass der Höhenabstand über die gesamte Arbeitsbreite möglichst konstant bleibt.

Bei Fahrten derartiger Verteilmaschinen werden zunehmend sog. Spurplanungssysteme eingesetzt. Mittels Spurplanungssystemen werden jeweils die Fahrspuren (Verfahrwege) der Verteilmaschinen so geplant, dass mittels dieser optimale Fahrspuren und Fahrwege eingehalten werden, d. h. dass die Anzahl an Überfahrten auf ein Minimum begrenzt werden kann oder dass eine Arbeitsbreite einer landwirtschaftlichen Maschine insbesondere auch bei spitz zulaufenden Ackerflächen möglichst ganzflächig genutzt werden kann.

Derartige Spurplanungssysteme sind aus der Praxis vor allem bei autonomen oder teilautonomen Verteilmaschinen bekannt bzw. verbreitet. Mittels des Spurplanungssystems werden hierbei jeweils Fahrspuren der Verteilmaschine definiert und anschließend mittels der Verteilmaschine während einer Feldarbeit exakt abgefahren. Zu diesem Zwecke kann das Spurplanungssystem und/oder die Verteilmaschine mit einem Positionsbestimmungssystem (GPS, Glonass, Galileo oder dergl.) verbindbar sein.

Zur Erfassung der Höhenabstände im Rahmen der Lagesteuerung des Verteilgestänges ist es aus dem Stand der Technik ferner bekannt, am Verteilgestänge in Richtung zum Pflanzenbestand orientierte, d. h. im Wesentlichen senkrecht nach unten gerichtete, Ultraschallsensoren vorzusehen, mit denen ein Ist-Abstand des Verteilgestänges zum Pflanzenbestand bzw. zur Ackerfläche erfasst werden kann.

Bekannte Systeme zur Lagesteuerung des Verteilgestänges, die solche Ultraschallsensoren verwenden, haben jedoch den Nachteil, dass die Lagesteuerung des Gestänges oftmals zu spät auf sich ändernde Höhenabstände zwischen Verteilgestänge und Pflanzenbestand reagieren kann, insbesondere bei hohen Fahrgeschwindigkeiten. Der Grund ist die vergleichsweise lange Systemreaktionszeit, d. h. die Zeit, die zwischen einer Erfassung der Höhenlage und einer tatsächlichen Anpassung, d. h. einer Veränderung der Lage des Verteilgestänges, vergeht. Diese Reaktionszeit wird beispielsweise beeinflusst durch die vergleichsweise hohe Massenträgheit des Gestänges, die Reaktionszeit der Stelleinrichtung, z. B. einer Hydraulik hiervon, und der Verarbeitungszeit der Sensordaten.

Es ist somit eine Aufgabe der Erfindung, eine verbesserte Technik zur Lagesteuerung des Verteilgestänges zur Anpassung an sich verändernde Höhenabstände zu einem Pflanzenbestand oder einer Ackerfläche bereitzustellen, mit der Nachteile herkömmlicher Techniken vermieden werden können. Die Aufgabe der Erfindung ist es insbesondere, eine solche verbesserte Technik zur Lagesteuerung des Verteilgestänges bereitzustellen, die sich für den Einsatz zusammen mit einem Spurplanungssystem eignet.

Diese Aufgaben werden durch Vorrichtungen und Verfahren mit den Merkmalen der unabhängigen Ansprüche gelöst. Vorteilhafte Weiterbildungen sind in den abhängigen Ansprüchen und der Beschreibung angegeben.

Gemäß einem ersten allgemeinen Gesichtspunkt der vorliegenden Offenbarung wird eine landwirtschaftliche Verteilmaschine bereitgestellt. Die landwirtschaftliche Verteilmaschine kann eine Feldspritze oder ein pneumatischer Düngerstreuer sein.

Die landwirtschaftliche Verteilmaschine (nachfolgend auch kurz als Verteilmaschine bezeichnet) umfasst ein Verteilgestänge zum Ausbringen von Material, wie Düngemittel, Pflanzenschutzmittel oder Saatgut. Das Verteilgestänge weist zueinander verschwenkbare Segmente auf, die in einer senkrecht zur Vorwärtsfahrtrichtung der Verteilmaschine angeordneten Ebene relativ zueinander verschwenkbar sind. Anders ausgedrückt sind die Segmente jeweils um Achsen verschwenkbar, die zueinander parallel sind und im Wesentlichen in horizontaler Richtung bzw. in Vorwärtsfahrtrichtung verlaufen. Das Verteilgestänge ist hierbei (in ausgeklappter Arbeitsstellung) vorzugsweise breiter als eine Spurbreite der Landmaschine und kann diese weiter vorzugsweise um ein Vielfaches überschreiten. Ferner können mit Ausnahme der äußeren Segmente die Segmente an ihren beiden Enden jeweils schwenkbeweglich mit einem benachbarten Segment verbunden sein, derart, dass die inneren Segmente jeweils mit zwei anderen benachbarten Segmenten schwenkbeweglich verbunden sind und die beiden äußeren Segmente nur mit einem benachbarten Segment schwenkbeweglich verbunden sind und ein freies Ende aufweisen. Es wird jedoch betont, dass die Verschwenkbarkeit der Segmente in der Ebene, die senkrecht zur Vorwärtsfahrtrichtung der Landmaschine ist, nicht ausschließt, dass die Segmente gemäß einer weiteren Variante zusätzlich auch um vertikale Achsen verschwenkbar ausgeführt sein können, beispielsweise mittels zusätzlicher Schwenkgelenke. Hierdurch kann das Verteilgestänge von einer ausgeklappten Arbeitsstellung in eine eingeklappte Transportstellung überführt werden und umgekehrt.

Die landwirtschaftliche Verteilmaschine umfasst ferner eine ansteuerbare Stelleinrichtung zur Veränderung einer Relativposition der Segmente des Verteilgestänges zueinander, insbesondere um die Segmente in einer senkrecht zur Vorwärtsfahrtrichtung der Verteilmaschine angeordneten Ebene relativ zueinander zu verschwenken. Die Stelleinrichtung kann hierzu zwischen benachbarten Segmenten angeordnete ansteuerbare Stellzylinder, z. B. Hydraulik- oder Pneumatikzylinder, aufweisen.

Die landwirtschaftliche Verteilmaschine umfasst ferner eine Sensoreinrichtung, die dazu ausgebildet ist, die Relativposition der Segmente zueinander zu erfassen. Beispielsweise kann die Sensoreinrichtung ausgebildet sein, die Drehlagen und/oder Drehwinkel benachbarter Segmente zu erfassen. Die landwirtschaftliche Verteilmaschine umfasst ferner in an sich bekannter Weise eine Positionsbestimmungseinrichtung, die ausgebildet ist, Positionsdaten der Verteilmaschine und/oder des Verteilgestänges zu bestimmen. Die Positionsbestimmungseinrichtung kann eine satellitengestützte Positionsbestimmungseinrichtung sein, um die Position z. B. anhand von GPS-Signalen zu erfassen.

Die landwirtschaftliche Verteilmaschine umfasst ferner eine Steuereinrichtung, die dazu ausgebildet ist, bei einem Überfahren einer zu bearbeitenden landwirtschaftlichen Fläche entlang einer Fahrspur die Relativpositionen der Segmente mit den zugeordneten Positionsdaten anhand der Daten der Sensoreinrichtung und der Positionsbestimmungseinrichtung zu bestimmen und in einer Speichereinrichtung zu speichern. Die Relativpositionen der Segmente können z. B .in Form von Daten beschrieben und/oder gespeichert werden, welche die Drehlagen und/oder Drehwinkel der Segmente um ihre horizontalen Drehachsen angeben. Die Positionsdaten können z. B. in Form von Ortskoordinaten der Verteilmaschine und/oder des Verteilgestänges angegeben werden.

Die Steuereinrichtung ist ferner dazu ausgebildet, bei einem späteren erneuten Überfahren der landwirtschaftlichen Fläche entlang der gleichen oder im Wesentlichen gleichen Fahrspur zur Lagesteuerung des Verteilgestänges Stellsignale für die Stelleinrichtung abhängig von den gespeicherten Relativpositionen der Segmente und Positionsdaten zu erzeugen, um die gleichen Relativpositionen der Segmente entlang der Fahrspur einzustellen, wie bei der vorherigen Überfahrt. Dies bedeutet, dass die Steuereinrichtung für jede (Fahr-)Position entlang der Fahrspur Stellsignale erzeugt, die bewirken, dass die gleichen Relativpositionen der Segmente eingestellt werden, wie sie für diese (Fahr-)Position zuvor gespeichert wurden.

Durch das positionsabhängige Erfassen und Speichern der Relativpositionen der Segmente bei der Fahrt entlang einer Fahrspur können diese Informationen bei einer erneuten Fahrt entlang dieser Fahrspur (z. B. im darauffolgenden Jahr) vorteilhaft wiederverwendet werden, um die gleichen Relativpositionen der Segmente anhand der gespeicherten Relativpositionen erneut einzustellen, insbesondere proaktiv und/oder vorrausschauend einzustellen. Die vorliegende Erfindung beruht auf der Erkenntnis, dass die erfasste Relativposition der Segmente zueinander zusammen mit den zugehörigen Positionsdaten der Verteilmaschine ein Höhenprofil eines vom Verteilgestänge überfahrenen Geländes implizit kodieren können und/oder davon abhängig sind. Anstatt nun jedoch ein Geländeprofil selbst mittels einer zusätzlichen und kostenaufwändigen Sensorik, z. B. in Form einer 3D-Kamera, zu erfassen oder durch aufwändige Rechenoperationen aus den Relativpositionen und Positionsdaten zu berechnen, werden vorliegend die gespeicherten Relativpositionen der Segmente direkt wiederverwendet, um bei späteren Überfahrten entlang der gleichen Fahrspruch die gleichen Relativpositionen erneut einzustellen.

Da insbesondere Fahrspuren einer landwirtschaftlichen Fläche oftmals gleichbleiben, insbesondere bei der Verwendung von Spurplanungssystemen, und sich das Geländeprofil in der Regel nicht ändert, können einmal erfasste Relativpositionen vorteilhaft bei nachfolgenden Überfahrten wiederverwendet werden. Die Relativpositionen der Segmente können beispielsweise bei einer ersten Überfahrt entlang der Fahrspur abhängig von den Messdaten einer Abstands-Sensoreinrichtung vorgegeben und/oder eingestellt werden, die ausgebildet ist, einen Höhenabstand eines oder mehrerer der Segmente zur Geländeoberfläche und/oder zu einem Pflanzenbestand der landwirtschaftlichen Fläche zu bestimmen. Die Relativpositionen der Segmente werden bevorzugt so vorgegeben und/oder eingestellt, dass der Höhenabstand des Verteilgestänges über die gesamte Arbeitsbreite möglichst konstant bleibt. D. h. die Segmente des Verteilgestänges, aus denen sich das Verteilgestänge entlang seiner Arbeitsbreite zusammensetzt, weisen im Rahmen der möglichen Gestängekinematik alle möglichst den gleichen Abstand zur einer Geländeoberfläche auf.

Die erste Überfahrt (wenn noch keine gespeicherten Relativpositionen vorhanden sind) kann beispielsweise langsamer als die nachfolgenden Überfahrten erfolgen, um eine Systemreaktionszeit bei der Erfassung der Höhenabstände und/oder Lagesteuerung des Verteilgestänges zumindest teilweise zu kompensieren. Die nachfolgenden Überfahrten können optional dann schneller erfolgen, da anhand der nun gespeicherten Daten zu den Relativpositionen der Segmente entlang der Fahrspur diese proaktiv und/oder vorausschauend eingestellt werden können.

Vorstehend wurde festgestellt, dass die Steuereinrichtung bei einem späteren erneuten Überfahren der landwirtschaftlichen Fläche entlang der im Wesentlichen gleichen Fahrspur zur Lagesteuerung des Verteilgestänges Stellsignale für die Stelleinrichtung abhängig von den gespeicherten Relativpositionen der Segmente und Positionsdaten erzeugt, um die gleichen Relativpositionen der Segmente entlang der Fahrspur einzustellen, wie bei der vorherigen Überfahrt. Unter einer "im Wesentlichen gleichen Fahrspur" kann eine Fahrspur verstanden werden, die von der vorherigen Fahrspur um nicht mehr als einen vorbestimmten Grenzwert quer zur Fahrtrichtung oder vorbestimmten Offset abweicht. Gemäß dieser Ausführungsform werden die zuvor gespeicherten Relativpositionen der Segmente auch dann wiederverwendet, wenn sich die Verteilmaschine bei der späteren erneuten Fahrt entlang der Fahrspur z. B. quer zur Fahrtrichtung versetzt bewegt, wobei hier für den Versatz bzw. Offset Maximalwerte vorgegeben sein können.

Gemäß einer weiteren Ausführungsform ist die Steuereinrichtung ausgebildet, bei mehrfachen Überfahren einer zu bearbeitenden landwirtschaftlichen Fläche entlang der gleichen oder im Wesentlichen gleichen Fahrspur jeweils die Relativpositionen der Segmente mit den zugeordneten Positionsdaten anhand der Daten der Sensoreinrichtung und der Positionsbestimmungseinrichtung zu bestimmen und aus den jeweils bestimmten Relativpositionen und Positionsdaten für die mehrfachen Überfahrten Mittel- oder Durchschnittswerte für die Relativpositionen der Segmente mit den zugeordneten Positionsdaten zu bestimmen und bei zukünftigen Überfahrten für die Lagesteuerung zu verwenden. Beispielsweise können aus einem mehrmaligen Überfahren jeweils durch Mittelwertbildung wiederum neue Relativpositionen der Segmente zueinander berechnet werden, die bei der nächsten Fahrt entlang der Fahrspur für die Erzeugung der Stellsignale verwendet werden. Dies bietet den Vorzug, dass die gespeicherten Daten und die diesbzgl. Gestängesteuerung zunehmend besser werden.

Unter einer Systemreaktionszeit bei der Lagesteuerung kann die technisch bedingte Verzögerungszeit verstanden werden, die zwischen der Erzeugung eines Stellsignals für die Stelleinrichtung und einer korrespondierenden Anpassung der Lage des Verteilgestänges vergeht.

In einer weiteren Ausführungsform ist die Steuereinrichtung dazu ausgebildet, die abhängig von den gespeicherten Relativpositionen der Segmente und Positionsdaten erzeugten Stellsignale für die Stelleinrichtung unter Berücksichtigung einer Systemreaktionszeit derart frühzeitig zu erzeugen, dass die Systemreaktionszeit bei der Lagesteuerung zumindest teilweise kompensiert wird. Dies bedeutet, dass die Steuereinrichtung, wenn an einer Stelle entlang der Fahrspur nach Maßgabe der gespeicherten Relativpositionen geänderte Relativpositionen der Segmente eingestellt werden sollen, die Stellsignale vor Erreichen dieser Stelle entlang der Fahrspur erzeugt, also vorausschauend erzeugt. Dadurch kann eine Systemreaktionszeit zur Einstellung der geänderten Relativpositionen zumindest teilweise kompensiert werden. Besonders vorteilhaft ist eine Variante, bei der die Steuereinrichtung die Stellsignale so frühzeitig erzeugt, dass eine nach diesem Zeitpunkt verbleibende Fahrzeit bis zum Erreichen der Stelle, an der die geänderten Relativpositionen der Segmente eingestellt sein sollen, im Wesentlichen der Reaktionszeit der Stelleinrichtung bei der Lagesteuerung der Segmente entspricht. Bei dieser Variante kann die Systemreaktionszeit vollständig kompensiert werden.

Zudem oder alternativ kann die Steuereinrichtung ausgebildet sein, eine Fahrgeschwindigkeit der Verteilmaschine anzupassen, insbesondere zu reduzieren, wenn sich die Verteilmaschine einer Stelle entlang der Fahrspur nähert, an der die Lage der Segmente abhängig von den gespeicherten Relativpositionen der Segmente und Positionsdaten geändert wird, um eine Systemreaktionszeit bei der Lagesteuerung zumindest teilweise zu kompensieren. Dies ist besonders vorteilhaft, wenn entlang der Fahrspur kurz hintereinander die Relativpositionen der Segmente zueinander geändert werden sollen. Durch die Reduzierung der Fahrgeschwindigkeit wird sichergestellt, dass hierfür ausreichend Zeit bleibt. Die Fahrgeschwindigkeit kann hierbei z. B. um einen vorbestimmten Betrag, der z. B. experimentell ermittelt und als für die Praxis zweckmäßig befunden wurde, kurzzeitig abgesenkt werden.

In einer weiteren Ausführungsform umfasst die Verteilmaschine eine Abstands-Sensoreinrichtung, die ausgebildet ist, einen Höhenabstand eines oder mehrerer der Segmente zur Geländeoberfläche und/oder zu einem Pflanzenbestand der landwirtschaftlichen Fläche zu bestimmen. Die Steuereinrichtung ist ferner vorzugsweise ausgebildet, die Stellsignale für die Stelleinrichtung sowohl abhängig von den gespeicherten Relativpositionen der Segmente und Positionsdaten als auch abhängig von den erfassten Höhenabständen der Abstands-Sensoreinrichtung zu erzeugen. Anhand der Abstands-Sensoreinrichtung kann z. B. ein Ist-Höhenabstand eines oder mehrerer der Segmente zur Geländeoberfläche und/oder zu einem Pflanzenbestand der landwirtschaftlichen Fläche bestimmt werden und vorteilhaft zur Korrektur der anhand der gespeicherten Relativpositionen eingestellten Relativpositionen verwendet werden, falls der sich hieraus ergebende Höhenabstand nicht einem Soll-Höhenabstand entspricht. Die Höhensteuerung der Segmente kann hierdurch verbessert werden.

Beispielsweise kann die Steuereinrichtung ausgebildet sein, die Stellsignale für die Stelleinrichtung zunächst abhängig von den gespeicherten Relativpositionen der Segmente und Positionsdaten zu erzeugen, insbesondere vorrauschauend zur zumindest teilweisen Kompensation einer Systemreaktionszeit bei der Lagesteuerung zu erzeugen. Die Steuereinrichtung kann anschließend anhand der aktuell erfassten Höhenabstände der Abstands-Sensoreinrichtung Stellsignale für die Stelleinrichtung erzeugen. Diese anschließend erzeugten Stellsignale können insbesondere zur Korrektur der Gestängelage dienen, wenn anhand der Abstands-Sensoreinrichtung eine Abweichung eines Ist-Höhenabstands zu einem Soll-Höhenabstand eines oder mehrerer Segmente festgestellt wird.

Zudem oder alternativ kann die Steuereinrichtung ausgebildet sein, eine Grobsteuerung und/oder eine Vorsteuerung für die Stelleinrichtung abhängig von den gespeicherten Relativpositionen der Segmente und Positionsdaten zu erzeugen, und eine Feinsteuerung für die Stelleinrichtung abhängig von den erfassten Höhenabständen der Abstands-Sensoreinrichtung zu erzeugen. Vorteilhaft kann eine besonders schnelle und genaue Höhensteuerung der Segmente bei der Fahrt entlang der Fahrspur erzeugt werden.

Die Abstands-Sensoreinrichtung kann mehrere entlang des Verteilgestänges verteilt angeordnete Abstandssensoren, z. B. Ultraschallsensoren umfassen. Die Ultraschallsensoren können in Richtung zum Pflanzenbestand orientierte, d. h. im Wesentlichen senkrecht nach unten gerichtete, Ultraschallsensoren sein, mit denen ein Ist-Abstand des Verteilgestänges zum Pflanzenbestand bzw. zur Ackerfläche erfasst werden kann.

Ferner kann die Sensoreinrichtung, die dazu ausgebildet ist, die Relativposition der Segmente zueinander zu erfassen, zwischen den Segmenten angeordnete Sensoren umfassen, wobei die Sensoren beispielsweise als Winkelsensoren oder Potentiometer ausgeführt sind.

In einer weiteren Ausführungsform ist die Steuereinrichtung dazu ausgebildet, die beim Überfahren der zu bearbeitenden landwirtschaftlichen Fläche entlang einer Fahrspur bestimmten Relativpositionen der Segmente mit den zugeordneten Positionsdaten zu jeder Fahrposition oder in regelmäßigen Abständen zu bestimmen. Die regelmäßigen Abstände können Positionen beispielsweise alle x Meter umfassen, wobei x beispielhaft in einem Bereich von 0,5 -5 Metern liegt. Die regelmäßigen Abstände können auch Zeitpunkte umfassen, beispielsweise alle y Sekunden, wobei y beispielhaft in einem Bereich von 2 - 10 Sekunden liegt. Dies ermöglicht eine für typische Arbeitsvorgänge der Verteilmaschinen ausreichend genaue Erfassung der Relativpositionen der Segmente entlang einer Fahrspur.

In einer weiteren Ausführungsform umfasst die Verteilmaschine ferner ein Spurplanungssystem, welches die Fahrspuren zum Überfahren der landwirtschaftlichen Fläche vorgibt. Das Spurplanungssystem kann in an sich bekannter Weise ausgebildet sein. Vorteilhaft ist das Spurplanungssystem dazu ausgebildet, bei wiederholten Überfahrten der landwirtschaftlichen Fläche die gleichen oder im Wesentlichen gleichen Fahrspuren zu verwenden. Dies bietet den Vorteil, dass bei vorherigen Überfahrten erfasste Relativpositionen für die nachfolgenden Fahrten wiederverwendet werden können.

Gemäß einer weiteren Ausführungsform ist die Speichereinrichtung zur Speicherung der bestimmten Relativpositionen der Segmente mit den zugeordneten Positionsdaten ausgeführt als eine Datenspeichereinrichtung der Verteilmaschine. Alternativ oder zusätzlich kann die Speichereinrichtung auch eine in Bezug auf die Verteilmaschine externe Datenspeichereinrichtung, z. B. eine Cloud-Speichereinrichtung, sein.

Gemäß einer bevorzugten Ausführungsform ist die landwirtschaftliche Verteilmaschine eine Feldspritze und das Verteilgestänge ist ein Spritzgestänge, aufweisend ein Mittelteil und zwei seitliche Ausleger, an denen jeweils mehrere Spritzdüsen angeordnet sind.

Die landwirtschaftliche Verteilmaschine kann jedoch auch ein pneumatischer Düngerstreuer sein. Hierbei ist das Streugut entlang von Verteilleitungen, die zumindest abschnittsweise am Verteilgestänge angeordnet sind, mittels eines Luftvolumenstroms in Richtung von Ausbringelementen zum Ausbringen des Streuguts förderbar. Die Ausbringelemente weisen hierbei jeweils vorzugsweise ein Prallelement zur Ausbildung eines Streufächers aus Streugut auf.

Gemäß einem zweiten allgemeinen Gesichtspunkt der vorliegenden Offenbarung wird ein Verfahren zur Lagesteuerung eines Verteilgestänges zum Ausbringen von Material, wie Düngemittel, Pflanzenschutzmittel oder Saatgut, einer landwirtschaftlichen Verteilmaschine, vorzugsweise einer Feldspritze oder eines pneumatischen Düngerstreuers, bereitgestellt. Hierbei weist das Verteilgestänge zueinander verschwenkbare Segmente auf, die in einer senkrecht zur Vorwärtsfahrtrichtung der Verteilmaschine angeordneten Ebene relativ zueinander verschwenkbar sind. Ferner ist eine Relativposition der Segmente zueinander durch eine ansteuerbare Stelleinrichtung der Verteilmaschine veränderbar.

Die Verteilmaschine umfasst eine Sensoreinrichtung, die dazu ausgebildet ist, die Relativposition der Segmente zueinander zu erfassen und eine Positionsbestimmungseinrichtung, die ausgebildet ist, Positionsdaten der Verteilmaschine und/oder des Verteilgestänges zu bestimmen.

Das Verfahren umfasst folgende Schritte:
- Ein Bestimmen von Relativpositionen der Segmente mit den zugeordneten Positionsdaten bei einem Überfahren einer zu bearbeitenden landwirtschaftlichen Fläche entlang einer Fahrspur und ein Speichern der bestimmten Relativpositionen und zugeordneten Positionsdaten; und
- bei einem späteren erneuten Überfahren der landwirtschaftlichen Fläche entlang der gleichen oder im Wesentlichen gleichen Fahrspur, ein Durchführen einer Lagesteuerung des Verteilgestänges, wobei Stellsignale für die Stelleinrichtung abhängig von den gespeicherten Relativpositionen der Segmente und Positionsdaten erzeugt werden, um die gleichen Relativpositionen der Segmente entlang der Fahrspur einzustellen, wie bei der vorherigen Überfahrt.

Zur Vermeidung von Wiederholungen sollen rein vorrichtungsgemäß offenbarte Merkmale auch als verfahrensgemäß offenbart gelten und beanspruchbar sein (und umgekehrt). Die vorgenannten Aspekte und beschriebenen Merkmale betreffend die Ausbildung der Verteilmaschine und insbesondere der Ausbildung der Steuereinrichtung gelten somit auch für das Verfahren, wobei die beschriebenen Funktionen der Steuereinrichtung auch als entsprechende Verfahrensschritte des Verfahrens offenbart und beanspruchbar sein sollen.

Ferner sind folgende Aspekte offenbart:
Die landwirtschaftliche Verteilmaschine kann als eine selbstfahrende oder als eine mittels eines Zugfahrzeugs ziehbare bzw. gezogene oder als eine an einem Zugfahrzeug anbaubare bzw. angebaute Verteilmaschine ausgebildet sein. Die selbstfahrende Verteilmaschine oder das Zugfahrzeug kann zudem als in einem autonomen Fahrmodus betreibbares Fahrzeug (z. B. vollautonom oder teilautonom) ausgeführt sein.

Die landwirtschaftliche Verteilmaschine kann ein Trägerfahrzeug und ein am Trägerfahrzeug mittelbar oder unmittelbar angeordnetes Verteilgestänge aufweisen, das zumindest um eine in Fahrtrichtung verlaufende Schwenkachse bewegbar angeordnet ist. Anders ausgedrückt ist das Verteilgestänge in der senkrecht zur Vorwärtsfahrtrichtung der Landmaschine angeordneten Ebene verschwenkbar.

Die landwirtschaftliche Verteilmaschine kann ferner eine Stelleinrichtung umfassen, mittels derer das Verteilgestänge mit einem Aufbau- oder Rahmenabschnitt und/oder mit einem starr oder beweglich gelagerten Stützabschnitt des Trägerfahrzeugs gekoppelt ist, derart, dass mittels der Stelleinrichtung eine Stellkraft erzeugbar ist, um das Verteilgestänge um die Schwenkachse zu bewegen.

Das Verteilgestänge, z. B. das Spritzgestänge, kann mindestens zwei über Gelenke an einem Mittelteil angeordnete Ausleger und an den Auslegern angeordnete Spritzdüsen zum Ausbringen von Flüssigkeiten aufweisen. Das Mittelteil und die zwei Ausleger können die zueinander verschwenkbaren Segmente ausbilden, deren Relativposition von der Sensoreinrichtung erfasst wird und zur Bestimmung des Geländeprofils verwendet wird.

Gemäß einer weiteren Variante dieser bevorzugten Ausführungsform kann jeder Ausleger in mindestens zwei Auslegersegmente unterteilt sein, die über eine horizontale Achse schwenkbar zueinander angeordnet sind, wobei die Auslegersegmente untereinander mittels Gelenken verbunden sind und eine Stellbewegung der einzelnen Auslegersegmente zueinander aktiv steuerbar ist. Das Mittelteil und die beidseitig hiervon angeordneten mindestens zwei Auslegersegmente bilden gemäß dieser Variante die zueinander verschwenkbaren Segmente, deren Relativposition von der Sensoreinrichtung erfasst wird.

Das Verteilgestänge kann allgemein eine Mehrzahl an zueinander verschwenkbaren Segmenten aufweisen, beispielsweise drei, fünf, sieben oder neun Segmente, welche wiederum in Abhängigkeit von einer Arbeitsbreite verschiedene Breiten von einem, zwei oder mehr Metern aufweisen können. Die Segmente sind in Längsrichtung des Verteilgestänges nebeneinander angeordnet.

Die Positionsbestimmungseinrichtung kann in an sich bekannter Weise einen satellitengestützten Positionsdatenempfänger umfassen, beispielsweise einen GPS- (Global Positioning System-), Glonass- oder Galileo-Empfänger. Ferner kann die Positionsbestimmungseinrichtung ausgebildet sein, Positionsdaten mittels eines Navigationssystems der Landmaschine zu bestimmen. Die Positionsdaten können aktuelle geographische Koordinaten der Landmaschine umfassen.

Vorzugsweise kann sich der Begriff "Steuereinrichtung" auf eine Elektronik (z. B. ausgeführt als eine Treiberschaltung oder mit Mikroprozessoren) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1A:: eine perspektivische Ansicht der landwirtschaftlichen Maschine gemäß einem Ausführungsbeispiel;
- Figur 1B:: eine Seitenansicht der landwirtschaftlichen Verteilmaschine aus Figur 1A;
- Figur 1C:: eine Hinteransicht der Verteilmaschine aus Figur 1A;
- Figur 1D:: eine Seitenansicht im Schnitt des Verteilgestänges gemäß einem Ausführungsbeispiel;
- Figur 2: ein Blockdiagramm zur Illustration einer Lagesteuerungsfunktion gemäß einer Ausführungsform;
- Figur 3: ein Ablaufdiagramm zur Illustration des Verfahrens gemäß einer Ausführungsform;
- Figur 4:: eine Draufsicht der Verteilmaschine aus Figur 1A;
- Figur 5:: eine landwirtschaftliche Verteilmaschine gemäß einer Ausführungsform beim Überfahren unterschiedlicher Geländequerschnitte; und
- Figur 6: eine schematische Illustration der Höhensteuerung anhand der gespeicherten Relativpositionen und anhand aktueller Höhenabstandsdaten gemäß einer Ausführungsform.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

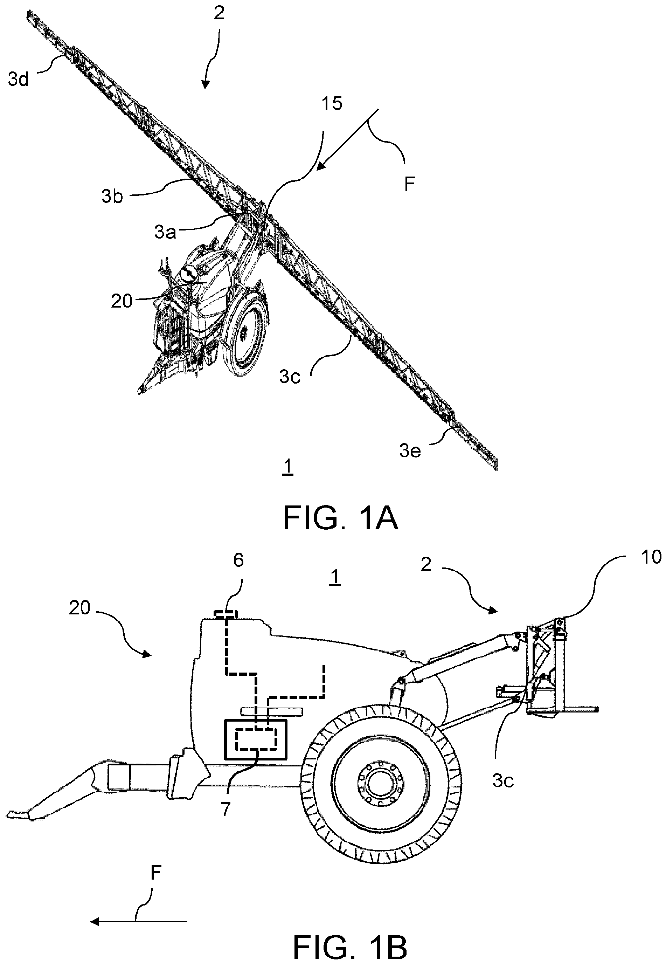

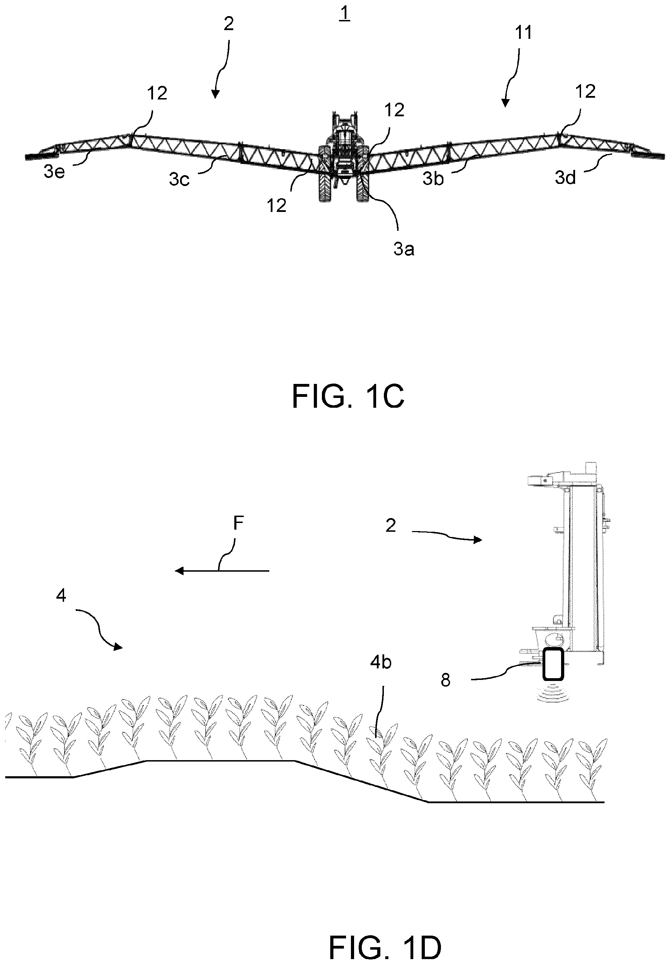

Die Figur 1A zeigt eine perspektivische Ansicht einer landwirtschaftlichen Verteilmaschine 1 gemäß einem Ausführungsbeispiel. Eine Seitenansicht und eine Hinteransicht sind in den Figuren 1B und 1C dargestellt.

Die Verteilmaschine 1 ist vorliegend beispielhaft als gezogene landwirtschaftliche Verteilmaschine, insbesondere als Feldspritze, ausgebildet. Die landwirtschaftliche Verteilmaschine 1 weist ein Trägerfahrzeug 20 und ein am Trägerfahrzeug 20 schwenkbar und höhenverstellbar angeordnetes Verteilgestänge 2 auf. Das Verteilgestänge 2 ist am Trägerfahrzeug um eine in Fahrtrichtung F verlaufende Schwenkachse bewegbar angeordnet. Das Verteilgestänge 2 dient zum Ausbringen von Material, wie Düngemittel oder Pflanzenschutzmittel.

Das Verteilgestänge 2 umfasst mehrere Segmente 3a, 3b, 3c, 3d, 3e, die zudem in einer senkrecht zur Vorwärtsfahrtrichtung F der Verteilmaschine 1 angeordneten Ebene relativ zueinander verschwenkbar sind (vgl. Figur 1C). Die Segmente sind in Längsrichtung des Verteilgestänges nebeneinander angeordnet. An den Segmenten sind jeweils mehrere Spritzdüsen gehaltert (nicht dargestellt) zum Ausbringen des Materials.

In den Figuren 1A und 1C ist das Verteilgestänge 2 beispielhaft aus fünf solcher Segmente 3a bis 3e gebildet: einem Mittelteil 3a, an dem jeweils schwenkbar zwei seitliche Ausleger angeordnet sind, wobei jeder seitliche Ausleger wiederum aus zwei zueinander verschwenkbaren Segmenten 3c und 3e bzw. 3b und 3d gebildet ist. Diese Ausführung ist nur beispielhaft. So kann alternativ jeder der seitlichen Ausleger nur ein Segment aufweisen oder auch aus mehr als zwei Segmenten bestehen. Figur 1A zeigt eine Stellung des Verteilgestänges 2, in der die Segmente 3a bis 3e gerade zueinander ausgerichtet sind. Figur 1C zeigt eine Stellung, bei der die Segmente 3a bis 3e im Vergleich hierzu in einer senkrecht zur Vorwärtsfahrtrichtung F der Verteilmaschine 1 angeordneten Ebene relativ zueinander verschwenkt sind.

Die Segmente 3a bis 3e sind über horizontale, in Fahrtrichtung verlaufende Achsen schwenkbar angeordnet und untereinander mittels Gelenken verbunden. Die Gelenke sind derart ausgebildet, dass sie einen Schwenkvorgang der einzelnen Segmente über eine horizontale Achse und/oder eine in Fahrtrichtung und durch das jeweilige Gelenk, um das geschwenkt werden soll, verlaufende Achse ermöglichen.

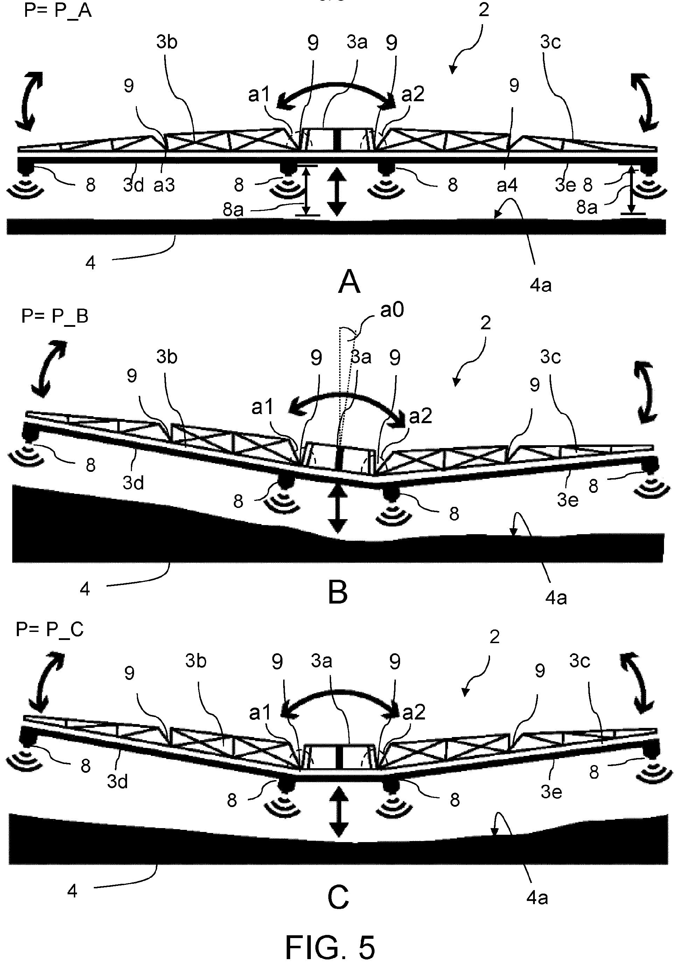

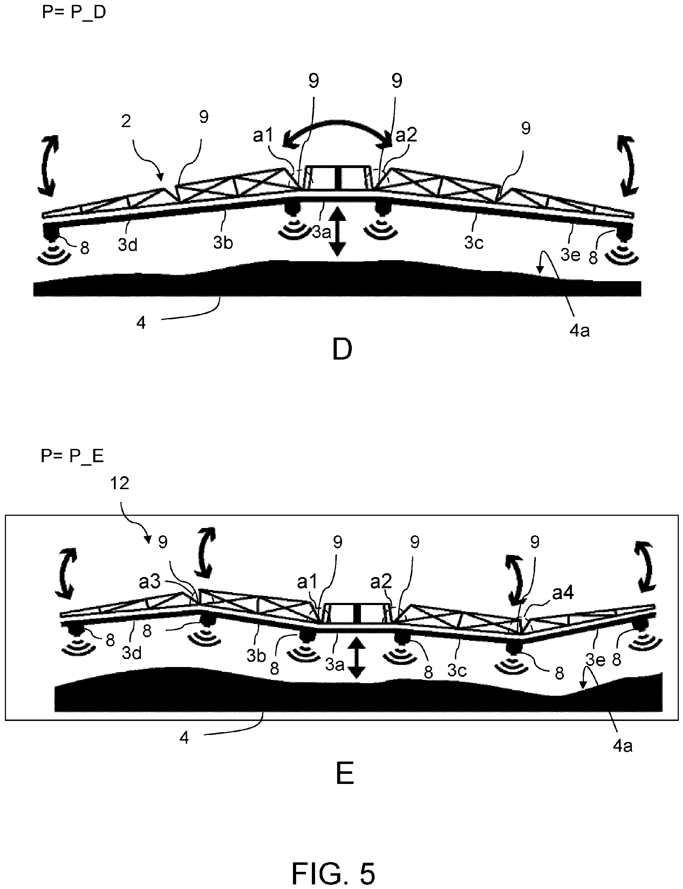

Die Verteilmaschine 1 umfasst ferner eine ansteuerbare Stelleinrichtung 11 zur aktiven Veränderung einer Relativposition der Segmente des Verteilgestänges zueinander. Die Stelleinrichtung umfasst mehrere Stellglieder, z. B. in Form von Hydraulik- oder Pneumatikzylindern, die jeweils endseitig an benachbarten Segmenten gehaltert sind und mittels derer eine Verschwenkstellung der einzelnen Segmente aktiv gesteuert werden kann. Die Stellglieder sind in der Lage, durch eine Stellbewegung die einzelnen Segmente 3a bis 3e in die gewünschte (Verschwenk-)Position relativ zueinander zu bringen. Die gewünschte Position kann diejenige sein, bei der alle Segmente 3a bis 3e im Rahmen der möglichen Kinematik denselben vordefinierten Abstand zur Bodenoberfläche 4a einer landwirtschaftlichen Fläche 4 aufweisen (was z. B. in den Ansichten der nachfolgend noch beschriebenen Figur 5 gezeigt ist). Die überfahrende landwirtschaftliche Fläche 4 wird nachfolgend auch als Gelände oder Geländeabschnitt bezeichnet.

Wie in Figur 1B dargestellt ist, kann das Mittelteil 3a des Verteilgestänges 2 optional höhenverstellbar am Trägerfahrzeug 20 gehaltert sein, was z. B. durch parallele Gestänge bzw. durch ein sog. Parallelogrammgestänge realisiert sein kann. Hiermit ist möglich, sowohl die Höhe des Mittelteiles 3a und zusätzlich seinen Winkel bezüglich der Trägermaschine 20 verstellen zu können.

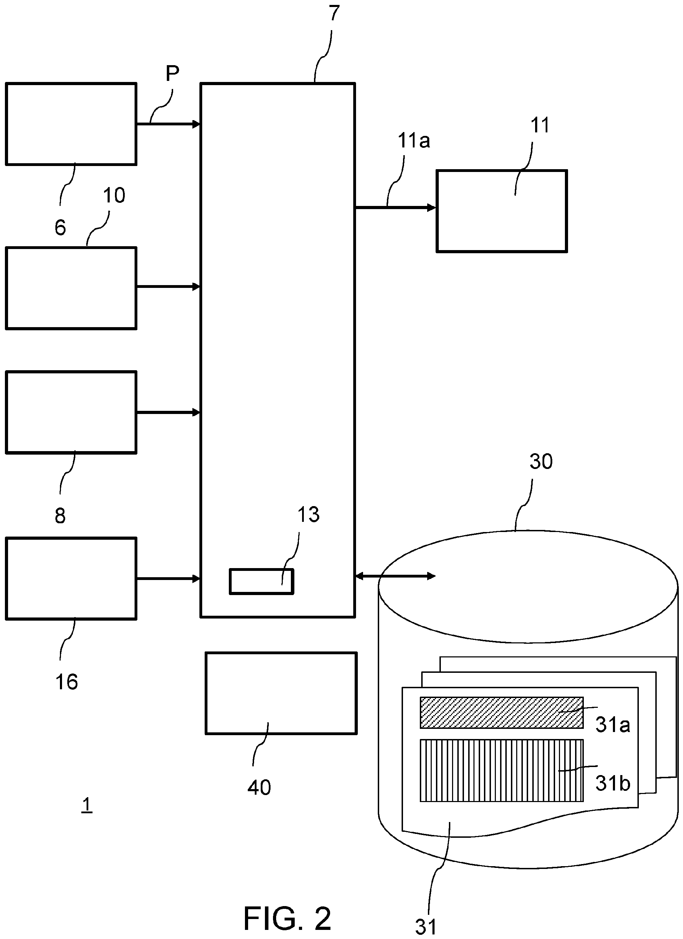

Bezugnehmend auf die Figuren 1B und 2 werden weitere Komponenten der Verteileinrichtung 1 erläutert. Figur 2 zeigt hierbei ein Blockdiagramm ausgewählter Komponenten der Verteileinrichtung 1 zur Illustration der Funktionsweise einer Lagesteuerung des Verteilgestänges.

Die Verteilmaschine 1 umfasst hierzu ferner eine, vorzugsweise satellitengestützte, Positionsbestimmungseinrichtung 6, die ausgebildet ist, Positionsdaten P der Landmaschine 1 und/oder des Verteilgestänges 2 zu bestimmen, so dass an jeder Stelle beim Überfahren eines Geländeabschnitts 4 die Ortsposition der landwirtschaftlichen Verteilmaschine 1 bekannt ist. Die Positionsbestimmungseinrichtung 6 kann beispielsweise auf dem Trägerfahrzeug 20 angeordnet sein und signaltechnisch mit einem Positionsbestimmungssystem (GPS, Glonass, Galileo oder dergl.) verbunden sein. Aufgrund des bekannten Abstands des Aufhängepunkts des Mittelteils 3a des Verteilgestänges 2 von der Positionsbestimmungseinrichtung 6 ist somit auch die Position des Verteilgestänges 2 beim Überfahren des Geländeabschnitts 4 bekannt.

Weiter umfasst die Verteilmaschine 1 eine Sensoreinrichtung 10, die dazu ausgebildet ist, die Relativposition der Segmente 3a bis 3e zueinander zu erfassen. Die Sensoreinrichtung 10 umfasst hierzu mehrere zwischen den Segmenten 3a bis 3e angeordnete Sensoren 9 (dargestellt in den Ansichten der Figur 5).

Die Verteilmaschine umfasst ferner eine Abstands-Sensoreinrichtung 8, die ausgebildet ist, einen Höhenabstand eines oder mehrerer der Segmente zur Geländeoberfläche und/oder zu einem Pflanzenbestand der landwirtschaftlichen Fläche zu bestimmen. Die Abstands-Sensoreinrichtung 8 umfasst hierzu mehrere entlang des Verteilgestänges verteilt angeordnete Abstandsensoren, z. B. ausgeführt als Ultraschallsensoren, was z. B. in Figur 1D illustriert ist. Die Abstandsensoren sind im Wesentlichen senkrecht nach unten gerichtet und können einen Ist-Abstand des Verteilgestänges 2 zum Pflanzenbestand bzw. zur Ackerfläche erfassen. Bei Erkennung einer Veränderung des Ist-Abstandes während der Fahrt, z. B. aufgrund einer Veränderung des Geländeprofils, kann die Höhenlage des Verteilgestänges entsprechend angepasst werden, um wieder einen Soll-Abstand des Verteilgestänges zum Pflanzenbestand bzw. zur Ackerfläche einzustellen. Je mehr Abstandssensoren bzw. Ultraschallsensoren in Längsrichtung des Verteilgestänges 2 verteilt angeordnet sind, desto besser können unterschiedliche Höhenabstände in Längsrichtung des Verteilgestänges 2 gemessen werden und bei der Höhensteuerung der einzelnen Segmente berücksichtigt werden.

Die Verteilmaschine 1 umfasst ferner eine Steuereinrichtung 7, die in Signalverbindung steht mit der Positionsbestimmungseinrichtung 6, der Sensoreinrichtung 10, und der Abstands-Sensoreinrichtung 8. Die Steuereinrichtung 7 kann eingangsseitig Daten weiterer Betriebsparameter 16 erhalten, z. B. die aktuelle Fahrgeschwindigkeit. Die Steuereinrichtung kann ferner in Signalkommunikation mit einem Spurplanungssystem 40 stehen.

Die Steuereinrichtung 7 ist ausgebildet, eine Höhenlage des Verteilgestänges 2, insbesondere der Segmente 3a bis 3e zu steuern. Hierzu erzeugt die Steuereinrichtung 7 Stellsignale 11a an die Stelleinrichtung 11, um die Schwenklage der Segmente 3a bis 3e relativ zueinander zu steuern. Die Funktion der Steuereinrichtung 7 kann in einem Steuergerät implementiert sein.

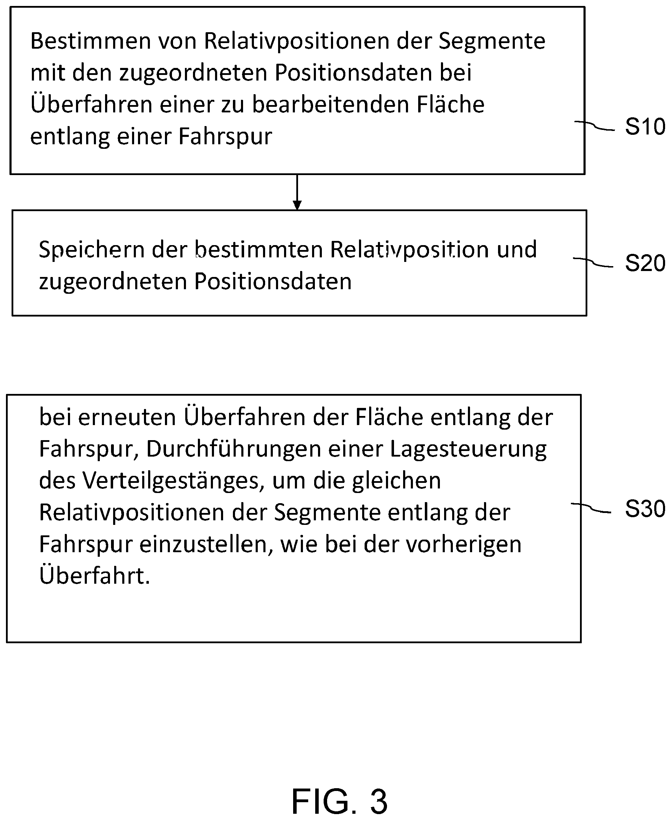

Insbesondere ist die Steuereinrichtung 7 ausgebildet, das Verfahren zur Lagesteuerung eines Verteilgestänges 2 auszuführen, wie es in Figur 3 schematisch illustriert ist.

Die Steuereinrichtung 7 ist ausgebildet, bei einem Überfahren einer zu bearbeitenden landwirtschaftlichen Fläche 4 entlang einer Fahrspur die Relativpositionen der Segmente mit den zugeordneten Positionsdaten P anhand der Daten der Sensoreinrichtung 10 und der Positionsbestimmungseinrichtung 6 zu bestimmen (Schritt 10 der Figur 3) und in der Speichereinrichtung 30 zu speichern (Schritt 20 der Figur 3). Die Speichereinrichtung 30 ist als nichtflüchtiger Daten-Speicher 30 der Verteileinrichtung ausgebildet.

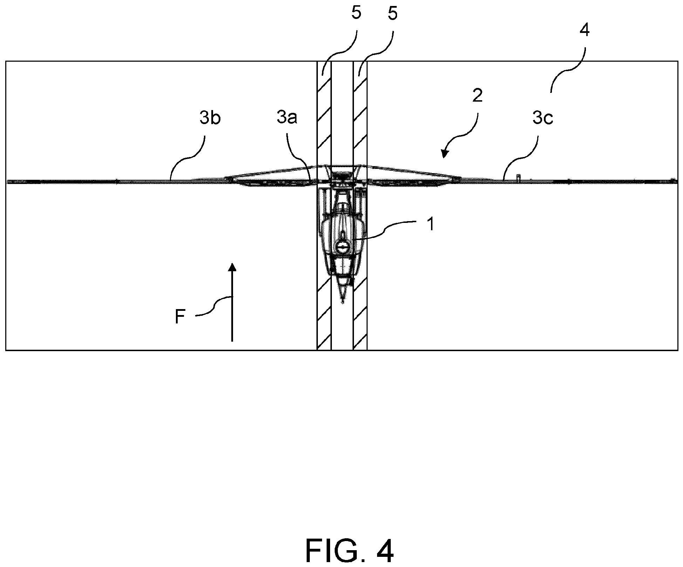

Figur 4 zeigt in diesen Zusammenhang eine Draufsicht der landwirtschaftlichen Verteilmaschine 1 beim Überfahren eines Geländeabschnitts 4, z. B. einer Ackerfläche. Hierbei fährt die landwirtschaftliche Verteilmaschine 1 entlang einer Fahrspur 5, z. B. entlang einer Fahrgasse, die in der Regel bereits während der Aussaat angelegt wird, um beim Befahren des jeweiligen Pflanzenbestands diesen bzw. die jeweiligen Nutzpflanzen nicht zu beschädigen. Die Fahrspur 5 kann z. B. von dem Spurplanungssystem 40 vorgegeben werden, wobei das Spurplanungssystem ausgebildet ist, bei wiederholten Überfahrten der landwirtschaftlichen Fläche 4 die gleichen oder im Wesentlichen gleichen Fahrspuren 5 zu verwenden.

Während der Überfahrt entlang der Fahrspur kann sich das Geländeprofil der überfahrenen landwirtschaftlichen Fläche 4 ändern. Dies ist in den Ansichten A bis E der Figur 5 dargestellt. Die Ansichten illustrieren eine landwirtschaftliche Verteilmaschine 1 (gezeigt ist zur Vereinfachung der Darstellung nur das Verteilgestänge 2, nicht aber das Trägerfahrzeug 20) beim Überfahren unterschiedlicher Geländequerschnitte.

Die Steuereinrichtung 7 verwendet die Daten der Abstands-Sensoreinrichtung 8, d. h. die erfassten Daten der entlang des Verteilgestänges 2 angeordneten Ultraschallsensoren 8, um einen Ist-Abstand 8a des Verteilgestänges bzw. der Segmente zur Fläche 4 zu bestimmen. Die Steuereinrichtung 7 ist ausgebildet, den Ist-Abstand für alle Segmente 3a bis 3e auf einen Soll-Abstand einzuregeln.

Die Ansicht A der Figur 5 zeigt eine Fahrposition P_A des Verteilgestänges 2 an einer Stelle, an der das Gelände 4 eben ist. Die Segmente 3a bis 3e sind zueinander fluchtend ausgerichtet, so dass alle Segmente 3a bis 3e den gleichen Ist-Abstand 8a zur Bodenoberfläche 4a haben. Die zwischen den Segmenten 3a bis 3e angeordneten Drehlagensensoren 9 erfassen die Relativpositionen a1 bis a4 der Segmente zueinander und übermitteln diese Daten an die Steuereinrichtung 7. Die Steuereinrichtung 7 speichert nun zur Fahrposition P_A die Relativpositionen a1 bis a4 der Segmente mit den zugeordneten Positionsdaten P.

Die Steuereinrichtung 7 ist ausgebildet, beim Überfahren der zu bearbeitenden landwirtschaftlichen Fläche 4 entlang der Fahrspur 5 zu jeder Fahrposition oder in regelmäßige Abständen die Relativpositionen a1 bis a4 der Segmente mit den zugeordneten Positionsdaten P zu bestimmen, beispielsweise alle 0,5 bis 2 Meter oder alle 5 Sekunden, und die erfassten Daten jeweils in der Speichereinrichtung 30 zu speichern. Die Steuereinrichtung 7 empfängt hierzu fortlaufend die Relativposition a1 bis a4 der Segmente 3a bis 3e zueinander, die von den Sensoren 9 erfasst werden. Die Relativpositionen der Segmente 3a bis 3e werden beispielsweise als relativer Drehwinkel ermittelt, die zwei benachbarte Segmente zueinander aufweisen. Die Steuereinrichtung 7 empfängt ferner fortlaufend die aktuellen Positionsdaten P der Verteilmaschine 1 von der Positionsbestimmungseinrichtung 6 und ordnet diese den Relativpositionen der Segmente zu. Entsprechend wird erfasst, wo entlang der Fahrspur 5 die Segmente welche Relativpositionen zueinander aufweisen bzw. aufgewiesen haben.

Im Gegensatz zur Situation der Ansicht A der Figur 5, wo das Gelände 4 eben ist, zeigen die Ansichten B bis D Ansichten von nachfolgenden Fahrpositionen P_B bis P_E des Verteilgestänges 2, an denen das Gelände - in Längsrichtung des Verteilgestänges 2 gesehen - uneben ist. Die Veränderung des Ist-Höheabstandes in Längsrichtung des Verteilgestänges 2 wird mittels der Ultraschallsensoren 8 erkannt. In Reaktion hierauf passt die Steuereinrichtung 7 die Schwenklage der Segmente an (durch Erzeugung entsprechender Stellsignale 11a), um wieder den gleichen Höhenabstand zur Geländeoberfläche 4a für alle Segmente einzustellen. Entsprechend ergeben sich bedingt durch das sich ändernde Geländeprofil unterschiedliche Relativpositionen der Segmente a1 bis a4 für die unterschiedlichen Fahrpositionen P_A bis P_E.

Die Besonderheit der Gestängelage an der Fahrposition P_B (Ansicht B) ist, dass zusätzlich das Mittelteil 3a relativ zum Trägerfahrzeug verschwenkt ist, dargestellt durch den Schwenkwinkel a0, der durch ein zwischen Mitteilteil und Trägerfahrzeug angeordnetes Potentiometer erfasst werden kann. Auch die Daten des Schwenkwinkels a0 können für jede Fahrposition in der Speichereinrichtung 30 gespeichert werden. Die Besonderheit der Gestängelage an der Fahrposition P_E (Ansicht E) ist, dass die beiden äußeren Segmente 3d und 3e aufgrund des Geländeprofils nicht fluchtend zu ihren benachbarten Segmenten 3b bzw. 3a ausgerichtet sind, sondern relativ hierzu verschwenkt sind, so dass wiederum alle Segmente 3a bis 3e den gleichen Abstand zur Geländeoberfläche 4a aufweisen.

Wie vorstehend bereits festgestellt, bestimmt und speichert die Steuereinrichtung 7 die Relativpositionen der Segmente a1 bis a4 für alle Fahrpositionen entlang der Fahrspur 5. Während oder zumindest nach der Fahrt entlang der Fahrspur 5 werden die erfassten Daten 31 in der Speichereinrichtung 30 gespeichert. Die gespeicherten Daten 31 umfassen Metadaten 31a zur der erfassten Fahrt, die z. B. eindeutig die überfahrende landwirtschaftliche Fläche 4 und die dabei verwendete Fahrspur 5 angeben. Die gespeicherten Daten 31 umfassen ferner die Daten 31b zu den erfassten Segmentpositionen für jede Fahrposition der Überfahrt, d. h. wo entlang der Fahrspur 5 die Segmente welche Relativpositionen zueinander aufgewiesen haben. Optional können weitere Daten gespeichert werden, wie z. B. die Fahrgeschwindigkeit zu jeder Fahrposition.

In der Speichereinrichtung 30 können weitere Daten für weitere Überfahrten gespeichert werden, die die erfassten Segmentpositionen für jede Fahrposition für nachfolgende Überfahrten der gleichen Fahrspur angeben oder die die erfassten Segmentpositionen für jede Fahrposition für Überfahrten anderer landwirtschaftlicher Flächen dokumentieren.

Ein besonderer Aspekt der vorliegenden Lagesteuerung des Verteilgestänges ist, dass bei einem späteren erneuten Überfahren der landwirtschaftlichen Fläche entlang der gleichen oder im Wesentlichen gleichen Fahrspur auf die gespeicherten Daten 31 für eine frühere Überfahrt dieser Fahrspur zurückgegriffen wird, um abhängig hiervon proaktiv die Position der Segmente relativ zueinander zu steuern (vgl. Schritt S30 der Figur 3).

Entsprechend ist die Steuereinrichtung 7 ausgebildet, bei einem späteren erneuten Überfahren der landwirtschaftlichen Fläche 4 entlang der gleichen oder im Wesentlichen gleichen Fahrspur 5 auf die gespeicherten Daten 31 der vorherigen Überfahrt zuzugreifen und zur Lagesteuerung des Verteilgestänges zu verwenden. Hierbei erzeugt die Steuereinrichtung 7 Stellsignale 11a für die Stelleinrichtung 11 abhängig von den gespeicherten Relativpositionen a1 bis a4 der Segmente und Positionsdaten P, um die gleichen Relativpositionen a1 bis a4 der Segmente entlang der Fahrspur einzustellen, wie bei der vorherigen Überfahrt.

Anders ausgedrückt werden im Beispiel der Figur 5 an den Positionen P_A bis P_E die anhand der gespeicherten Daten 31 vorrausschauend wieder die gleichen Relativpositionen a1 bis a4 der Segmente 3a bis 3e eingestellt, wie es bei der vorherigen Überfahrt der Fall war, ohne jedoch hier zunächst auf die Daten der Abstands-Sensoreinrichtung angewiesen zu sein. So weiß die Steuereinrichtung 7 z. B. anhand der gespeicherten Daten 31, dass nach der Position P_A (Ansicht A), an den nachfolgenden Stellen P_B, P_C, P_D und P_E jeweils unterschiedliche Relativpositionen der Segmente eingestellt sein sollen. Die Steuereinrichtung kann die korrespondierende Verstellung der Segmente jeweils vorrauschauend, d. h. bereits vor Erreichen der entsprechenden Positionen P_B, P_C, P_D und P_E, einleiten durch Erzeugen entsprechender Stellsignale.

Die Steuereinrichtung 7 kann hierzu ferner ausgebildet sein, die abhängig von den gespeicherten Relativpositionen der Segmente und Positionsdaten erzeugten Stellsignale 11a für die Stelleinrichtung 11 unter Berücksichtigung einer Systemreaktionszeit 13 derart frühzeitig zu erzeugen, dass die Systemreaktionszeit 13 bei der Lagesteuerung zumindest teilweise kompensiert wird. Die durchschnittliche Systemreaktionszeit 13, die es braucht, um die Segmente 3a bis 3e relativ zueinander zu verschwenken, kann z. B. in der Steuereinrichtung 7 hinterlegt sein. Abhängig von der Fahrgeschwindigkeit kann die Steuereinrichtung 7 somit den Zeitpunkt zur Erzeugen der Stellsignale 11a so wählen, dass diese rechtzeitig vor Erreichen der Position, an der die geänderten Relativpositionen eingestellt sein sollen, erzeugt werden und die veränderten Relativpositionen bei Erreichen der Position auch eingestellt sind. Im Vergleich zur ersten Überfahrt kann z. B. die nachfolgende Überfahrt schneller erfolgen, da anhand der gespeicherten Daten 31 die Anpassung an geänderte Geländequerschnitte vorausschauend erfolgen kann, während diese bei der "ersten" Überfahrt erst durch die Abstands-Sensoreinrichtung 8 erfasst werden müssen.

Ein besonderer Vorzug ist, dass die Steuereinrichtung somit ohne dass ein Geländeprofil vonnöten wäre, die Segmentpositionen an sich ändernde Geländequerschnitte anpassen kann, da die diesbzgl. Informationen (zum Geländeprofil) implizit in den gespeicherten Relativpositionen der Segmente für die unterschiedlichen (Fahr-)Positionen entlang der Fahrspur 5 enthalten sind.

Alternativ kann die Steuereinrichtung 7 ausgebildet sein, eine Fahrgeschwindigkeit der Verteilmaschine 1 anzupassen, insbesondere zu reduzieren, wenn sich die Verteilmaschine 1 einer Stelle entlang der Fahrspur 5 nähert, an der die Lage der Segmente abhängig von den gespeicherten Relativpositionen der Segmente und Positionsdaten geändert wird, um eine Systemreaktionszeit 13 bei der Lagesteuerung zumindest teilweise zu kompensieren.

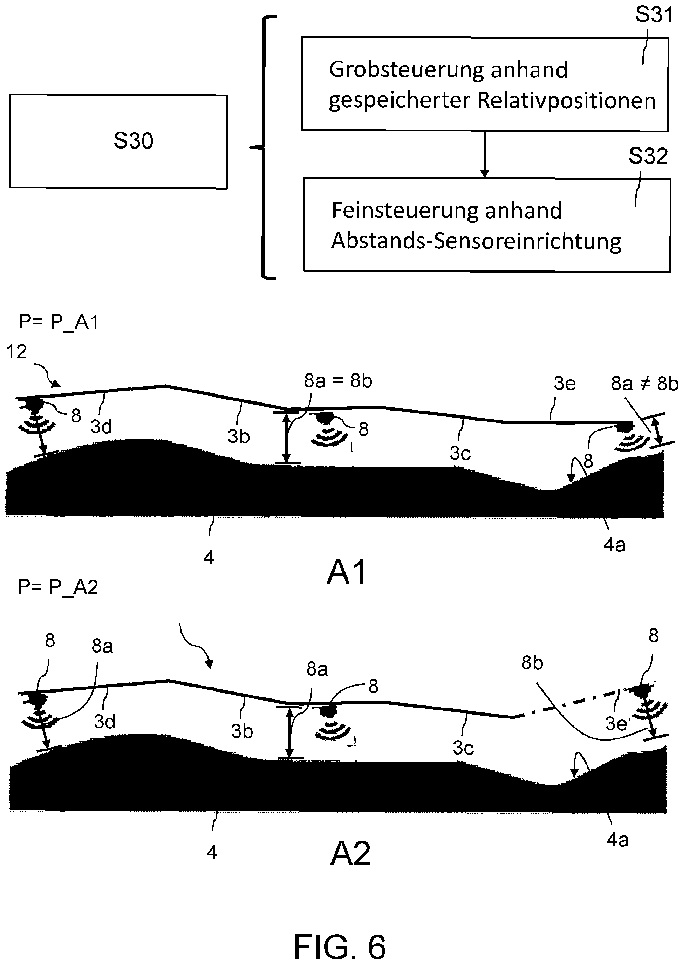

Figur 6 illustriert ein Ausführungsbeispiel, gemäß dem die für eine frühere Fahrt gespeicherten Relativpositionen der Segmente für eine Vorsteuerung bzw. Grobsteuerung der Segmentlagen verwendet werden (Schritt S31) und die bei der aktuellen Überfahrt aktuell erfassten Höhenabstände dann für eine Feinsteuerung genutzt werden (Schritt S32).

Die Steuereinrichtung 7 ist hierzu ausgebildet, bei einer Fahrt entlang einer Fahrspur 5 zu prüfen, ob bereits Daten 31 zu den Relativpositionen der Segmente in der Speichereinrichtung 30 vorhanden sind, die bei einer früheren Fahrt entlang der gleichen oder im Wesentlichen gleichen Fahrspur 5 erfasst wurden. Falls ja, werden diese Daten 31 für eine Vorsteuerung und/oder Grobsteuerung verwendet. D. h. die Stellsignale 11a für die Stelleinrichtung 11 werden zunächst abhängig von den gespeicherten Relativpositionen a1 bis a4 der Segmente und Positionsdaten P erzeugt, insbesondere vorrauschauend zur zumindest teilweisen Kompensation der Systemreaktionszeit 13 bei der Lagesteuerung erzeugt.

In der Ansicht A1 der Figur 6 ist beispielhaft ein mögliches Ergebnis dieser Vorsteuerung des Schritts 31 gezeigt. Die Segmente 3a bis 3e sind hier in einer stark vereinfachten Darstellung als Linienabschnitte dargestellt. Die Segmente 3a bis 3e wurden im Rahmen der Vorsteuerung so relativ zueinander verschwenkt, dass die gleichen Relativpositionen an der Stelle P_A1 der Segmente 3a bis 3e eingestellt sind, wie es bei der vorherigen Überfahrt erfasst und gespeichert wurde.

Gleichzeitig wird mittels der Ultraschallsensoren 8 geprüft, ob der Ist-Abstand 8a zur Geländeoberfläche 4a aller Segmente dem Soll-Abstand 8b entspricht. Dies ist in Ansicht A1 für das Segment 3e nach Durchführung der Vorsteuerung nicht der Fall. Stattdessen ist in Ansicht A1 das Segment zu nah zum Gelände hin verschwenkt. Dies kann z. B. der Fall sein, weil die bei der früheren Fahrt erfasste Relativposition des Segments 3e nicht korrekt war oder nicht korrekt erfasst wurde, weil die Vorsteuerung fehlerhaft durchgeführt wurde oder weil sich das Geländeprofil zwischenzeitlich geändert hat.

Jedenfalls ist die Steuereinrichtung 7 ausgebildet, anhand der aktuell erfassten Höhenabstände 8a der Abstands-Sensoreinrichtung 8 Stellsignale 11a für die Stelleinrichtung 11 zur Korrektur der Gestängelage zu erzeugen, um eine Feinsteuerung durchzuführen. In diesen Fall wird in Reaktion auf den zu geringen Höhenabstand des Segments 3e dieses Segment 3e nachträglich nach oben verschwenkt, um wieder den Soll-Abstand zu erreichen. Die Steuereinrichtung 7 erzeugt hierzu ein entsprechendes Stellsignal für den Stellzylinder, der an den beiden Segmenten 3e und 3c endseitig befestigt ist, um das Segment 3e relativ zum Segment 3c nach oben zu verschwenken. Dies ist in der Ansicht A2 dargestellt, wo die Lage der Segmente nach der Feinsteuerung gezeigt ist. Alle Segmente 3a bis 3e weisen den gleichen Höhenabstand zur Geländeoberfläche 4a auf, der dem Soll-Höhenabstand entspricht. Für die anderen Segmente ist keine Korrektur im Rahmen der Feinsteuerung erforderlich.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Landwirtschaftliche Verteilmaschine, z. B. Feldspritze
- 2: Verteilgestänge
- 3a - 3e: Segment
- 4: Landwirtschaftliche Fläche
- 4a: Geländeoberfläche
- 4b: Pflanzenbestand
- 5: Fahrspur
- 6: Positionsbestimmungseinrichtung
- 7: Steuereinrichtung
- 8: Abstands-Sensoreinrichtung, z. B. Ultraschallsensoren
- 8a: Ist-Abstand Verteilgestänge zu Gelände
- 8b: Soll-Abstand Verteilgestänge zu Gelände
- 9: Drehlagensensor
- 10: Sensoreinrichtung
- 11: Stelleinrichtung
- 11a: Stellsignale
- 12: Stellzylinder
- 13: Systemreaktionszeit
- 15: Drehlagensensor
- 16: Fahrbetriebsparameter, z. B. Fahrgeschwindigkeit
- 20: Trägerfahrzeug
- 30: Speichereinrichtung
- 31: Daten einer ersten Überfahrt
- 31a: Metadaten zur ersten Überfahrt
- 31b: Daten zu Segmentposition für jedes Fahrposition
- 40: Spurplanungssystem
- F: Fahrtrichtung
- a0: Drehposition Mittelteil zum Trägerfahrzeug
- a1- a4: Relativposition der Segmente
- P: Positionsdaten

## Patentansprüche

1. Landwirtschaftliche Verteilmaschine (1), vorzugsweise eine Feldspritze oder ein pneumatischer Düngerstreuer, umfassend:
ein Verteilgestänge (2) zum Ausbringen von Material, wie Düngemittel, Pflanzenschutzmittel oder Saatgut, aufweisend zueinander verschwenkbare Segmente (3a - 3e), die in einer senkrecht zur Vorwärtsfahrtrichtung (F) der Verteilmaschine (1) angeordneten Ebene relativ zueinander verschwenkbar sind;
eine ansteuerbare Stelleinrichtung (11) zur Veränderung einer Relativposition der Segmente des Verteilgestänges zueinander;
eine Sensoreinrichtung (7), die dazu ausgebildet ist, die Relativposition der Segmente (3a - 3e) zueinander zu erfassen;
eine Positionsbestimmungseinrichtung (6), vorzugsweise eine satellitengestützte Positionsbestimmungseinrichtung, die ausgebildet ist, Positionsdaten der Verteilmaschine (1) und/oder des Verteilgestänges (2) zu bestimmen; und
eine Steuereinrichtung (7), die dazu ausgebildet ist,
bei einem Überfahren einer zu bearbeitenden landwirtschaftlichen Fläche (4) entlang einer Fahrspur (5) die Relativpositionen (a1 - a4) der Segmente mit den zugeordneten Positionsdaten (P) anhand der Daten der Sensoreinrichtung (10) und der Positionsbestimmungseinrichtung (6) zu bestimmen und in einer Speichereinrichtung (30) zu speichern, und
bei einem späteren erneuten Überfahren der landwirtschaftlichen Fläche (4) entlang der gleichen oder im Wesentlichen gleichen Fahrspur (5) zur Lagesteuerung des Verteilgestänges (2) Stellsignale (11a) für die Stelleinrichtung (11) abhängig von den gespeicherten Relativpositionen (a1 - a4) der Segmente und Positionsdaten (P) zu erzeugen, um die gleichen Relativpositionen (a1 - a4) der Segmente entlang der Fahrspur einzustellen, wie bei der vorherigen Überfahrt.

2. Landwirtschaftliche Verteilmaschine (1) nach Anspruch 1, wobei
die im Wesentlichen gleiche Fahrspur eine Fahrspur umfasst, die von der vorherigen Fahrspur um nicht mehr als einen vorbestimmten Grenzwert quer zur Fahrtrichtung oder vorbestimmten Offset abweicht.

3. Landwirtschaftliche Verteilmaschine (1) nach einem der vorherigen Ansprüche, wobei
die Steuereinrichtung (7) ausgebildet ist, bei mehrfachem Überfahren einer zu bearbeitenden landwirtschaftlichen Fläche (4) entlang der gleichen oder im Wesentlichen gleichen Fahrspur (5) jeweils die Relativpositionen der Segmente (3a - 3e) mit den zugeordneten Positionsdaten anhand der Daten der Sensoreinrichtung (10) und der Positionsbestimmungseinrichtung (6) zu bestimmen und aus den Daten für die mehrfachen Überfahrten Mittel- oder Durchschnittswerte für die Relativpositionen der Segmente (3a - 3e) mit den zugeordneten Positionsdaten zu bestimmen und bei zukünftigen Überfahrten für die Lagesteuerung zu verwenden.

4. Landwirtschaftliche Verteilmaschine (1) nach einem der vorherigen Ansprüche, wobei
die Steuereinrichtung (7) ausgebildet ist, die abhängig von den gespeicherten Relativpositionen der Segmente und Positionsdaten erzeugten Stellsignale (11a) für die Stelleinrichtung (11) unter Berücksichtigung einer Systemreaktionszeit (13) derart frühzeitig zu erzeugen, dass die Systemreaktionszeit (13) bei der Lagesteuerung zumindest teilweise kompensiert wird.

5. Landwirtschaftliche Verteilmaschine (1) nach einem der vorherigen Ansprüche, wobei
die Steuereinrichtung (7) ausgebildet ist, eine Fahrgeschwindigkeit der Verteilmaschine (1) anzupassen, insbesondere zu reduzieren, wenn sich die Verteilmaschine (1) einer Stelle entlang der Fahrspur (5) nähert, an der die Lage der Segmente abhängig von den gespeicherten Relativpositionen der Segmente und Positionsdaten geändert wird, um eine Systemreaktionszeit (13) bei der Lagesteuerung zumindest teilweise zu kompensieren.

6. Landwirtschaftliche Verteilmaschine (1) nach einem der vorherigen Ansprüche,
aufweisend eine Abstands-Sensoreinrichtung (8), die ausgebildet ist, einen Höhenabstand eines oder mehrerer der Segmente zur Geländeoberfläche und/oder zu einem Pflanzenbestand der landwirtschaftlichen Fläche zu bestimmen, und
wobei die Steuereinrichtung (7) ausgebildet ist, die Stellsignale (11a) für die Stelleinrichtung (11) sowohl abhängig von den gespeicherten Relativpositionen der Segmente und Positionsdaten als auch abhängig von den erfassten Höhenabständen (8a) der Abstands-Sensoreinrichtung zu erzeugen.

7. Landwirtschaftliche Verteilmaschine (1) nach Anspruch 6, wobei
die Steuereinrichtung (7) ausgebildet ist, die Stellsignale (11a) für die Stelleinrichtung (11) zunächst abhängig von den gespeicherten Relativpositionen (a1 - a4) der Segmente und Positionsdaten (P) zu erzeugen, insbesondere vorrauschauend zur zumindest teilweisen Kompensation einer Systemreaktionszeit (13) bei der Lagesteuerung zu erzeugen, und anschließend anhand der aktuell erfassten Höhenabstände (8a) der Abstands-Sensoreinrichtung (8) Stellsignale (11a) für die Stelleinrichtung (11) zur Korrektur der Gestängelage zu erzeugen.

8. Landwirtschaftliche Verteilmaschine (1) nach Anspruch 6 oder 7, wobei
die Steuereinrichtung (7) ausgebildet ist, eine Grobsteuerung und/oder eine Vorsteuerung für die Stelleinrichtung (11) abhängig von den gespeicherten Relativpositionen (a1 - a4) der Segmente und Positionsdaten (P) zu erzeugen, und eine Feinsteuerung für die Stelleinrichtung (11) abhängig von den erfassten Höhenabständen (8a) der Abstands-Sensoreinrichtung zu erzeugen.

9. Landwirtschaftliche Verteilmaschine (1) nach einem der vorherigen Ansprüche 6 bis 8, wobei
die Abstands-Sensoreinrichtung (8) mehrere entlang des Verteilgestänges verteilt angeordnete Ultraschallsensoren umfasst.

10. Landwirtschaftliche Verteilmaschine (1) nach einem der vorherigen Ansprüche, wobei
die Sensoreinrichtung (10) zwischen den Segmenten (3a - 3e) angeordnete Sensoren umfasst, wobei die Sensoren vorzugsweise als Winkelsensoren oder Potentiometer ausgeführt sind.

11. Landwirtschaftliche Verteilmaschine (1) nach einem der vorherigen Ansprüche, wobei
die Steuereinrichtung (7) dazu ausgebildet ist,
die beim Überfahren der zu bearbeitenden landwirtschaftlichen Fläche (4) entlang einer Fahrspur (5) bestimmten Relativpositionen (a1 - a4) der Segmente mit den zugeordneten Positionsdaten (P) zu jeder Fahrposition oder in regelmäßigen Abständen zu bestimmen, beispielsweise alle x Meter, wobei x beispielhaft in einem Bereich von 0,5 bis 5 Metern liegt oder alle y Sekunden, wobei y beispielhaft in einem Bereich von 2 bis 10 Sekunden liegt.

12. Landwirtschaftliche Verteilmaschine (1) nach einem der vorherigen Ansprüche, ferner aufweisend
ein Spurplanungssystem (40), welches die Fahrspuren (5) zum Überfahren der landwirtschaftlichen Fläche (4) vorgibt, wobei das Spurplanungssystem ausgebildet ist, bei wiederholten Überfahrten der landwirtschaftlichen Fläche (4) die gleichen oder im Wesentlichen gleichen Fahrspuren (5) zu verwenden.

13. Landwirtschaftliche Verteilmaschine (1) nach einem der vorherigen Ansprüche, wobei
die Speichereinrichtung (30) zur Speicherung der bestimmten Relativpositionen der Segmente mit den zugeordneten Positionsdaten eine Datenspeichereinrichtung der Verteilmaschine und/oder eine externe Datenspeichereinrichtung, z. B. eine Cloud-Speichereinrichtung, umfasst.

14. Landwirtschaftliche Verteilmaschine (1) nach einem der vorherigen Ansprüche, wobei
die landwirtschaftliche Verteilmaschine (1) eine Feldspritze und das Verteilgestänge (2) ein Spritzgestänge ist, aufweisend ein Mittelteil und zwei seitliche Ausleger, an denen jeweils mehrere Spritzdüsen angeordnet sind; oder
die landwirtschaftliche Verteilmaschine ein pneumatischer Düngerstreuer ist, wobei das Streugut entlang von Verteilleitungen, die zumindest abschnittsweise am Verteilgestänge angeordnet sind, mittels eines Luftvolumenstroms in Richtung von Ausbringelementen förderbar ist, wobei die Ausbringelemente zum Ausbringen des Streuguts jeweils vorzugsweise ein Prallelement zur Ausbildung eines Streufächers aus Streugut aufweisen.

15. Verfahren zur Lagesteuerung eines Verteilgestänges zum Ausbringen von Material, wie Düngemittel, Pflanzenschutzmittel oder Saatgut einer landwirtschaftliche Verteilmaschine (1), vorzugsweise einer Feldspritze oder eines pneumatischen Düngerstreuers, wobei
das Verteilgestänge (2) zueinander verschwenkbare Segmente (3a - 3e), die in einer senkrecht zur Vorwärtsfahrtrichtung (F) der Verteilmaschine (1) angeordneten Ebene relativ zueinander verschwenkbar sind, aufweist und eine Relativposition der Segmente zueinander durch eine ansteuerbare Stelleinrichtung veränderbar ist; und
die Verteilmaschine eine Sensoreinrichtung (10), die dazu ausgebildet ist, die Relativposition der Segmente (3a - 3e) zueinander zu erfassen, und eine Positionsbestimmungseinrichtung (6), vorzugsweise eine satellitengestützte Positionsbestimmungseinrichtung, die ausgebildet ist, Positionsdaten der Verteilmaschine (1) und/oder des Verteilgestänges (2) zu bestimmen, umfasst;
wobei das Verfahren umfasst:
Bestimmen (S10) von Relativpositionen der Segmente mit den zugeordneten Positionsdaten bei einem Überfahren einer zu bearbeitenden landwirtschaftlichen Fläche entlang einer Fahrspur und Speichern (S20) der bestimmten Relativpositionen und zugeordneten Positionsdaten; und
bei einem späteren erneuten Überfahren der landwirtschaftlichen Fläche entlang der gleichen oder im Wesentlichen gleichen Fahrspur, Durchführen (S30) einer Lagesteuerung des Verteilgestänges, wobei Stellsignale (11a) für die Stelleinrichtung (11) abhängig von den gespeicherten Relativpositionen der Segmente und Positionsdaten erzeugt werden, um die gleichen Relativpositionen der Segmente entlang der Fahrspur einzustellen, wie bei der vorherigen Überfahrt.
